# NEW EUROPEAN PATENT SPECIFICATION

(11) **EP 0 223 317 B2**
(45) Date of publication and mention of the opposition decision: **11.05.1994**
(45) Mention of the grant of the patent: 12.04.1989
(21) Application number: 86202065.8
(22) Date of filing: 21.11.1986
(51) Int. Cl.: B29D 30/26, B29D 30/28

(54) **A device for supplying and stitching a belt plus tread onto the carcass for manufacturing a pneumatic tyre**
Vorrichtung zum Anbringen und Anheften von Gürteln und Laufflächen auf einer Reifenkarkasse
Dispositif pour amener et fixer une chape et une bande de roulement sur une carcasse de pneu

(30) Priority: 21.11.1985 NL 8503208
(43) Date of publication of application: 27.05.1987
(73) Proprietor: VMI EPE HOLLAND B.V., NL-8161 RK Epe (NL)
(72) Inventor: Huisman, Henk, NL-8161 DA Epe (NL)
(74) Representative: Kooy, Leendert Willem

(56) References cited:
- FR-A- 2 289 327
- GB-A- 1 149 723
- JP-A-57 208 231
- US-A- 3 475 254
- US-A- 3 976 532
- US-A- 4 314 864
- US-A- 4 474 399
- US-A- 4 614 562
- US-A- 4 634 489
- US-A- 4 667 574
- US-A- 4 689 106
- US-A- 4 820 373

## Description

The invention relates to a device as defined in the preamble of the claim.

Such a device is known from US-A-3475254, in which device the stitching rolls with their displacement units are disposed freely from the transfer ring.

Such a known device serves for arranging the tread plus the belt about the carcass on its drum, after which the transfer ring is slid away in order to make it possible to push the rolls against the tread so that by simultaneous rotation of the drum plus the carcass plus the belt plus the tread, the stitching of the tread plus the belt on the carcass is realised by the pressure of the rolls. After this stitching the rolls are removed and after that the transfer ring is arranged about the tread plus the belt and the carcass again so as to finally remove from the drum the stitched assembly of tread plus belt plus carcass.

Here a disadvantage is that sliding the transfer ring away and, after the stitching step, back again takes time and energy and causes wear of the bearings of the transfer ring on its sliding track. Because of this wear the centering of the transfer ring with respect to the carcass drum deteriorates, resulting in that the centering of the belt plus tread with respect to the carcass deteriorates, as a consequence of which the quality of the tyre deteriorates.

Said disadvantages are removed by the present invention in accordance with the characterizing part of the claim.

Thereby the stitching step can be effected by moving the rolls through the gates in the transfer ring without displacing the transfer ring. Thereby time and energy are saved and wear is reduced by not displacing the transfer ring during the stitching step, said reduced wear providing a better centering of the belt plus tread with respect to the carcass, which results in a better quality of the pneumatic tyre.

JP-A-57 208231 discloses a device for handling a green tire, comprising a carcass drum, a stitching unit placed adjacent to the carcass drum, and a transfer frame which is sickle-shaped so as to have a single opening which is not axially bounded in order to enable axial displacement of the transfer frame up to the carcass drum during the stitching operation.

The invention will be further elucidated in the following description of an example of an embodiment of the invented device, said embodiment being illustrated schematically in the annexed drawings.

Fig. 1 shows schematically a device for stitching a bel plus tread on a carcass.

Fig. 2 shows schematically the transfer ring and the stitching unit, viewed from the unit for assembling the belt plus the tread.

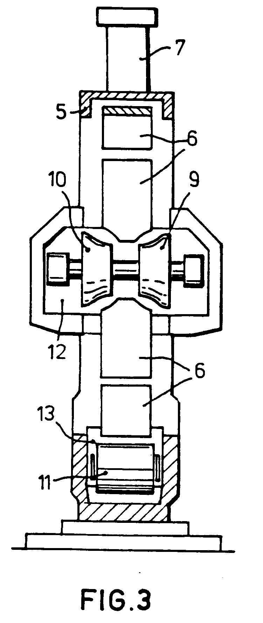

Fig. 3 shows schematically the transfer ring and the rolls of the stitching unit viewed along the line III-III in fig. 2.

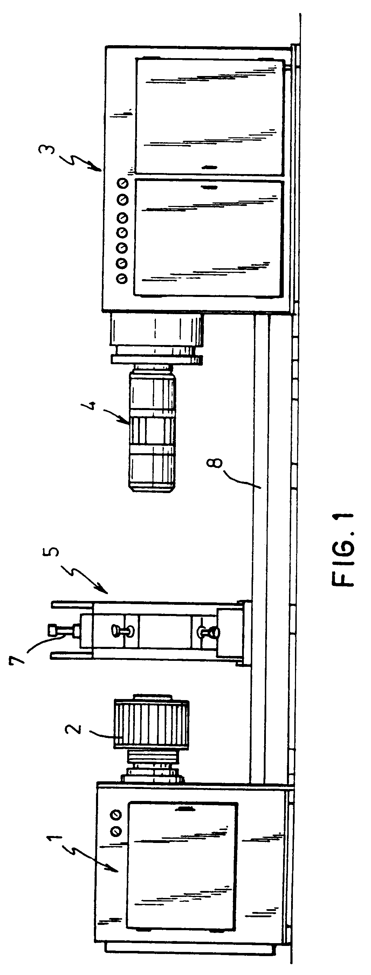

The invention can be applied to a device as showed schematically in fig. 1 and relates to as professionals call it, a combination of a static stitcher and a transfer ring, said combination being sold by applicant under the name «Inter-Stitcher» or «Combi-Stitcher». This device comprises an assembling unit 1, which is known in itself, for assembling a not-shown tread on a belt on a drum 2 in order to manufacture a pneumatic tyre. The device furthermore comprises an assembling unit 3, which is known in itself, for assembling or arranging on a drum 4 a not-shown, only partially expanded carcass for pneumatic tyre. The device also comprises a transfer ring 5, known in itself, which can be displaced along a track 8 to and from a position in which the transfer ring 5 extends coaxially about the drum 2 carrying the belt plus tread.

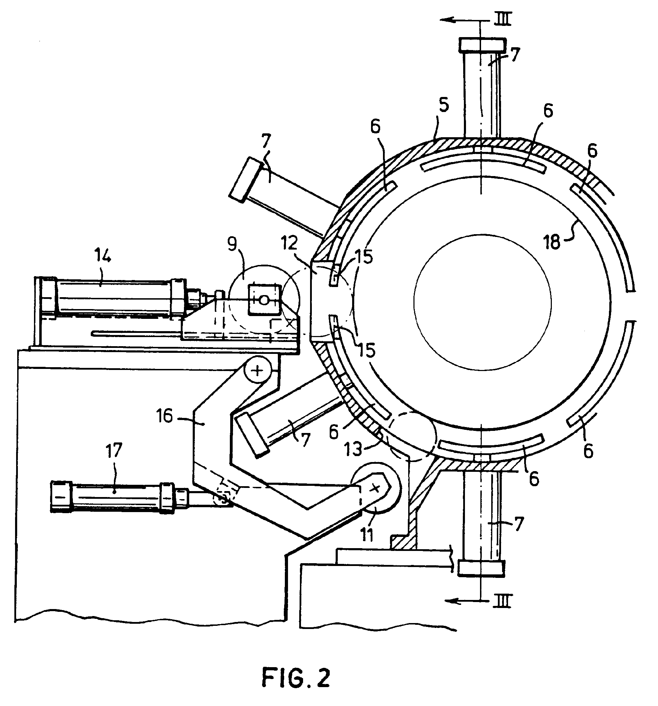

The transfer ring comprises segments 6 (vide fig. 2) which may be radially inwardly displaced by cylinders 7 in order to clamp the belt plus tread within the segments and to thereby carry them. The drawing shows six segments 6 but the transfer ring may have a different number of segments.

After the belt plus tread has been clamped between the segments 6, the cross-section of the drum 2 is reduced radially, so that the belt plus tread are released form the drum and are carried by the segments 6 only. Subsequently the transfer ring 5 is displaced along the track 8 until the transfer ring extends coaxially about the carcass on the drum 4, resulting in that the belt plus tread, carried by the transfer ring, extend coaxially about the only partially expanded carcass.

Subsequently the only partially expanded carcass is expanded against the belt by means of the drum 4. Thereafter the segments 6 of the trasnfer ring 5 are displaced radially outwardly, so that the tread is released from these segments, resulting in that the carcass, the belt and the tread on the drum 4 can be rotated. The belt plus the tread are then pushed against the carcass with an adjustable force by means of rolls (for instance rolls 9 + 10 and 11 of fig. 2) during simultaneous rotation of the drum 4 together with the carcass, the belt and the tread on it, so that the belt adheres to the carcass, after which the radial pneumatic tyre is ready for further processing.

In this respect it is remarked that the position of the track 8 has nothing to do with the invention, Therefore the track 8 may extend under, above, behind or in front of the drums 2 and 4. Moreover, unlike as shown in Fig. 1 , the device 1 might be arranged at the right hand and the device 3 at the left hand, wherein the drum 4 then points to the right and the drum 2 points then to the left. Finally the track 8 can show a right angle turn.

The bearing between the transfer ring 5 and the track 8 wears out by each displacement of the transfer ring, and because of said wear the centering of the transfer ring 5 with respect to the carcass dum 4 deteriorates. The centering of the transfer ring 5 with respect to the carcass drum 4 is important because the belt plus tread should be as concentrical as possible with respect to the bundles of bead wires in the carcass. Because the displacement of the transfer ring 5 to and from the carcass drum 4 prior to and after rolling the belt plus tread onto the carcass causes wear, the centering of the transfer ring with respect to the carcass drum is affected adversely by said wear.

The object of the invention is to remove the above disadvantages of the above indicated, known device. For this purpose according to the invention a gate in the circumference of the transfer ring 5 is provided for each roll or group of coaxial rolls. In the example of the invented device as shown in the drawings the stitching unit comprises two coaxial rolls 9 and 10 which can be moved through a gate 12 by means of a cylinder 14 in order to push these rolls against a tread 18 so as to adhere and mould the belt, which is situated inwardly of the tread, by means of said pushing and by rotating the carcass plus belt plus tread onto the carcass which is situated inwardly of the belt. Also in the example as shown in the drawings the stitching unit comprises a cylindrical roll 11 which can be moved through a gate 13 by means of a cylinder 17 and a pivotable arm 16 in order to push said roll on the tread plus belt with the same purpose as has been indicated with regard to rolls 9 and 10. Because of the invented gates in the circumference of the transfer ring, the transfer ring can remain in its place during stitching the tread plus the belt onto the carcass and yet the rolls can be pushed against the tread.

In the shown embodiment of the invented device, the rolls 9 and 10 can be slid by means of a cylinder 14 to and through the gate 12 in the circumference of the transfer ring 5 into the position shown in fig. 2 by dotted lines, wherein these rolls are pushed against the tread plus belt. By this sliding the rolls 9 and 10 are shifted radially to the tread and each roll is truncated-conically shaped with a concave arch-like axial cross-section in order to force the edge portions of the tread into the correct shape. In order to let these rolls pass the transfer ring and yet at the same time seize the largest possible portion of the surface of the tread, the adjacent ends of the adjacent segments 6 of the transfer ring 5 have recesses 15.

By means of the double-active pushing cylinder 14, the rolls 9 and 10 can be retracted to the free position shown by continuous lines. Instead of this pair of conical, coaxial rolls, a single, diabolical pressure roll can be used. Moreover the roll or group of coaxial rolls can be slidable parallel to the center line of the transfer ring instead of radially to the center line of the transfer ring.

Moreover in the shown embodiment the roll 11 can be pivoted by a cylinder 1 7 and a pivotable arm 16 to and through the gate 12 in the circumference of the transfer ring 5 into the position, shown in fig. 2 by dotted lines, wherein the roll is pushed against the tread plus belt. Thus the roll 11 is displaced along a curved path directed substantially radially to the tread and starting in the free position shown by continuous linea. The roll can be retracted to the free position by means of the double-active pressure cylinder. In order to let the roll 11 pass, the adjacent ends of the adjacent segments 6 of the transfer ring 5 are spaced farther apart than the ends of the segments which are not situated near a gate. The roll 11 is cylindrical or barrel-shaped so as to seize the central section of the tread, prior to the operation of rolls 9 and 10.

However the invention is not restricted to the shown embodiment as the number of pressure rolls or groups of coaxial pressure rolls may vary between 1 to 10 and even more. Moreover the shape of said pressure rolls may be adapted to the radial cross-section of the pneumatic tyre to be manufactured, and thus for instance the shape of a barrel, disk, cylinder, diabolo or a truncated cone are possible. The rolls may also be displaceable along a non-radial path to and from the tread.

The invented device can be used with all types of radial pneumatic tyres and with all types of apparatus having a transfer ring and pressure rolls. Altogether 15% of the cycle time is saved by using the invented gates in the transfer ring. The pressure cylinders (for instance 14 und 17) may be pneumatical or hydraulical ones for subatmospheric or super-atmospheric pressure.

## Claims

1. A device for supplying and stitching a belt plus tread onto a carcass for manufacturing a pneumatic tyre, the device comprising a unit (3) with a drum (4) for carrying the carcass, an transfer ring (5) with radially displaceable segments (6) for carrying the belt plus tread, said transfer ring (5) being movable along its centre axis to and from a position in which the transfer ring extends concentrically about the drum (4) for the carcass, and a stitching unit (9, 10, 11, 14, 16, 17) freely disposed from the transfer ring (5), said stitching unit (9, 10, 11, 14, 16, 17) comprising a group of coaxial rolls (9, 10), characterized in that, the stitching unit (9, 10, 11, 14, 16, 17) comprises in addition to the group of coaxial rolls (9, 10) at least one roll (11), each roll (9, 10, 11) being displacable between two adjacent segments (b) in order to stitch the belt plus tread onto the carcass, one gate (13) being present in the circumference of the transfer ring (5) for each roll (11) and another gate (12) for each group of coaxial rolls (9, 10), each gate (12, 13) being bounded by the transfer ring (5) in both axial directions.

## Patentansprüche

1. Vorrichtung zum Zuführen und Anheften eines Gürtels mit Lauffläche auf eine Karkasse für die Herstellung eines pneumatischen Reifens, enthaltend eine Einheit (3) mit einer Trommel (4) zum Tragen der Karkasse, einen Übertragungsring (5) mit radial verstellbaren Segmenten (6) zum Tragen des Gürtels mit Lauffläche, wobei der Übertragungsring (5) längs seiner Mittelachse in und aus einer Position beweglich ist, in der sich der Übertragungsring konzentrisch um die Trommel (4) für die Karkasse erstreckt, und eine Anhefteinheit (9,10,11,14,16,17), die frei von dem Übertragungsring (5) angeordnet ist, wobei die Anhefteinheit (9,10,11,14,16,17) eine Gruppe koaxialer Rollen (9,10) umfaßt, **dadurch** **gekennzeichnet**, daß die Anhefteinheit (9,10,11,14,16,17) zusätzlich zu der Gruppe koaxialer Rollen (9,10) wenigstens eine Rolle (11) umfaßt, wobei jede Rolle (9,10,11) zwischen zwei benachbarten Segmenten (6) verstellbar ist, um den Gürtel mit Lauffläche an der Karkasse anzuheften, wobei ein Durchlaß (13) im Umfang des Übertragungsringes (5) für jede Rolle (11) vorhanden ist, sowie ein weiterer Durchlaß (12) für jede Gruppe koaxialer Rollen (9,10), wobei jeder Durchlaß (12,13) in beiden axialen Richtungen durch den Übertragungsring (5) begrenzt wird.

## Revendications

1. Un dispositif pour présenter et fixer une bande de roulement et une chape sur une carcasse pour fabriquer un pneu, le dispositif comprenant une unité (3) avec un tambour (4) pour recevoir la carcasse, un anneau de transfert (5) avec des segments (6) à déplacement radial pour recevoir la bande de roulement et la chape, ledit anneau de transfert (5) étant mobile le long de son axe central de et vers une position dans laquelle l'anneau de transfert est placé concentriquement au tambour (4) portant la carcasse et une autre position en regard d'une unité d'assemblage (9, 10, 11, 14, 16, 17) disposée de façon indépendante par rapport à l'anneau de transfert (5), ladite unité d'assemblage (9, 10, 11, 14, 16, 17) comprenant un groupe de rouleaux co-axiaux (9, 10), caractérisé en ce que l'unité d'assemblage (9, 10, 11, 14, 16, 17) comprend, en plus du groupe de rouleaux co-axiaux (9, 10) au moins un rouleau (11), chaque rouleau (9, 10, 11) pouvant être engagé dans l'intervalle entre deux segments adjacents (6) de façon à appliquer la bande de roulement et la chape sur la carcasse, une ouverture (13) étant ménagée dans l'enceinte de l'anneau de transfert (5) pour chaque rouleau (11) et une autre ouverture (12) pour chaque groupe de rouleaux co-axiaux (9, 10), chaque ouverture (12, 13) étant bornée par l'anneau de transfert (5) dans les deux directions axiales.
